# EUROPEAN PATENT APPLICATION

(11) **EP 3 112 789 A1**
(43) Date of publication of application: **04.01.2017**
(21) Application number: 16177420.3
(22) Date of filing: 01.07.2016
(51) Int. Cl.: F28D 20/00, F24H 9/00, F24H 9/16, F24H 1/18, F24H 9/12

(54) **WATER HEATER**

(30) Priority: 03.07.2015 CN 201510389228
(71) Applicant: BSH Hausgeräte GmbH, 81739 München (DE)
(72) Inventor: Ling, Yuzheng, Nanjing,, 210000 (CN); Schröder, Bernd, Nanjing, 210008 (CN); Yu, Xianglei, Nanjing (CN)

(57) **Abstract**

The present invention discloses a water heater. The water heater has a housing and an inner container disposed in the housing, and further includes: a water outlet pipe that is disposed on the inner container and is in communication with the outside; and a discharge pipe connected to the inner container, where the discharge pipe is sleeved outside the water outlet pipe, an inlet end of the discharge pipe is close to a bottom of the inner container, and an inlet end of the water outlet pipe is higher than the inlet end of the discharge pipe. By means of the present invention, a prior-art problem that because a user is unable to clean up fouling in an inner container of a water heater by himself or herself, the user always uses polluted water, thereby affecting health of the user is resolved, enabling the user to clean up the fouling in the container of the water heater by himself or herself. Moreover, operations are convenient and easy. Therefore, a health hazard is eliminated in time and safety of water is ensured for the user.

## Description

### BACKGROUND

### Technical Field

The present invention relates to the technical field of water heating equipment, and in particular, to a water heater.

### Related Art

After a period of time of use of an existing storage-type water heater, a certain amount of sewage such as sediments and scale is deposited in the storage-type water heater, which pollutes water, thereby affecting health of users.

Currently, the existing water heater mainly has the following two sewage discharge manners. In a first manner, a special discharge outlet provided at a lower part of an inner container is used. Usually, the discharge outlet is blocked by a nozzle cap, and the nozzle cap is unscrewed during sewage discharge to implement the sewage discharge. In a second manner, an installation port of an anode bar is also used for sewage discharge, and the anode bar is detached to implement the sewage discharge. However, in the foregoing manner, generally, detachment and installation requires the use of a professional tool, which causes difficulties in discharging sewage by a user himself or herself. Therefore, most users are unable to deal with fouling in an inner container by themselves, and always use polluted water, thereby affecting health of the users.

For a prior-art problem that because a user is unable to clean up fouling in an inner container of a water heater by himself or herself, the user always uses polluted water, thereby affecting health of the user, an effective solution has not been proposed at present yet.

### SUMMARY

The present invention provides a water heater, to resolve at least a prior-art problem that because a user is unable to clean up fouling in an inner container of a water heater by himself or herself, the user always uses polluted water, thereby affecting health of the user.

To achieve the objective, according to an aspect of the present invention, a water heater is provided.

The water heater according to the present invention has a housing and an inner container disposed in the housing, and further includes: a water outlet pipe that is disposed on the inner container and is in communication with the outside; and a discharge pipe connected to the inner container, where the discharge pipe is sleeved outside the water outlet pipe, an inlet end of the discharge pipe is close to a bottom of the inner container, and an inlet end of the water outlet pipe is higher than the inlet end of the discharge pipe. Because the discharge pipe is sleeved outside the water outlet pipe, and the water outlet pipe is disposed by penetrating the discharge pipe, the two form two independent pipes, which are separately used for water discharge and sewage discharge. Therefore, a user can select by himself or herself to discharge sewage according to a need. Moreover, the water outlet pipe and the discharge pipe use a same water outlet, without the need of disposing a special discharge outlet as an existing water heater, which saves materials. A fully foamed material is disposed at a position of the discharge outlet of the existing water heater, which reduces energy consumption.

Preferably, the water outlet pipe is separated from the inlet end of the discharge pipe. The discharge pipe is sleeved outside the water outlet pipe, and the inlet end of the discharge pipe is separated from the water outlet pipe, to form an annular column inner cavity for sewage discharge.

Preferably, the water outlet pipe and the discharge pipe are coaxially disposed. The disposing facilitates cooperative installation of the water outlet pipe and the discharge pipe, and facilitates separation between the two.

Preferably, the inner container has a drainage nozzle, and the discharge pipe is detachably installed on the drainage nozzle. The disposing causes a small change in a structure of the inner container of the water heater. Moreover the discharge pipe is detachably installed, which is convenient for replacement and inner cleaning of the pipe.

Preferably, a connection channel matching the water outlet pipe is disposed at an outlet end of the discharge pipe, and a drainage channel is disposed on a side of the discharge pipe. The connection channel disposed at the outlet end of the discharge pipe is used to fix the water outlet pipe to the discharge pipe, to form a combined component to implement a water discharge function. The independent drainage channel is disposed on the side of the discharge pipe, to discharge sewage out of the inner cavity, thereby implementing a sewage discharge function.

An outlet of the water outlet pipe may be provided in the discharge pipe or extend out of the discharge pipe according to an actual need. Preferably, the outlet of the water outlet pipe may be disposed in parallel with a port at an outlet end of the connection channel. The disposing makes the water outlet pipe and the connection channel integrated together, which is convenient to connect to another external pipe joint.

Preferably, after matching is performed between the water outlet pipe and the connection channel, an inner cavity of the discharge pipe and the drainage channel form an L-shaped cavity. After matching is performed between the water outlet pipe and the connection channel, the connection channel is sealed by the water outlet pipe. In this case, a position of the discharge pipe near the inlet end and the drainage channel located on the side of the discharge pipe form the L-shaped cavity for sewage discharge.

Preferably, the discharge pipe is T-shaped. The discharge pipe is provided with the inlet end and the outlet end, and is provided with the drainage channel on the side, to form a T-shaped three-way structure.

Preferably, the water heater further includes: a valve body connected to the drainage channel. The valve body is disposed to open the drainage channel when sewage discharge is needed, and to close the drainage channel when sewage discharge is not needed.

Preferably, a valve plug is disposed in the valve body, and the valve plug has a channel, where the valve plug rotates between a first position at which the drainage channel is entirely communicated and a second position at which the drainage channel is entirely closed.

Preferably, a knob for controlling rotation of the valve plug is disposed outside the valve body. The knob is connected to the valve plug, and is used to control the valve plug to rotate to the first position and the second position.

Preferably, the foregoing knob is set to be rotatable in a single direction, which is convenient for a user to adjust a working status of the valve body.

By means of the present invention, a prior-art problem that because a user is unable to clean up fouling in an inner container of a water heater by himself or herself, the user always uses polluted water, thereby affecting health of the user is resolved, enabling the user to clean up the fouling in the container of the water heater by himself or herself. Moreover, operations are convenient and easy. Therefore, a health hazard is eliminated in time and safety of water is ensured for the user. Moreover, by means of a structure of the water heater of the present invention, materials can be saved, energy consumption can be reduced, and damage to the water heater caused by detachment is further prevented as well.

### BRIEF DESCRIPTION OF THE DRAWINGS

The accompanying drawings described herein provide further understanding of the present invention, and constitute a part of this application. The exemplary embodiments of the present invention and descriptions thereof are intended to illustrate the present invention, without constituting an improper limit to the present invention. In the accompanying drawings:
FIG. 1 is a schematic diagram of a water heater;
FIG. 2 is a schematic diagram of a discharge pipe;
FIG. 3 is a schematic structural diagram of the water heater;
FIG. 4 is a schematic enlarged diagram of an area A in FIG. 3; and
FIG. 5 is a schematic diagram of a valve body in a closed state.

### DETAILED DESCRIPTION

The present invention is described in detail with reference to accompanying drawings and in combination with embodiments in the following. It should be noted that embodiments in this application and features in the embodiments can be combined without any conflict.

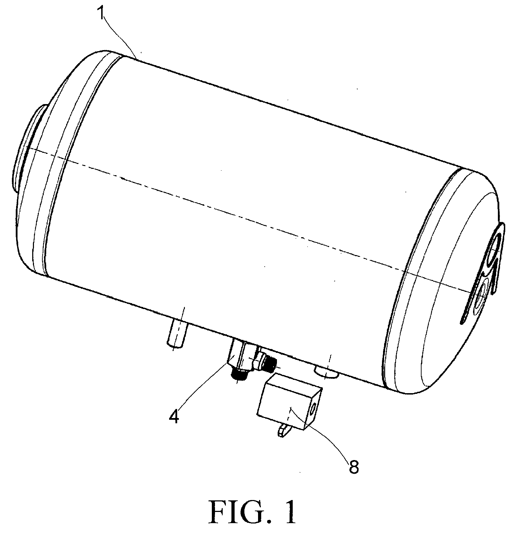

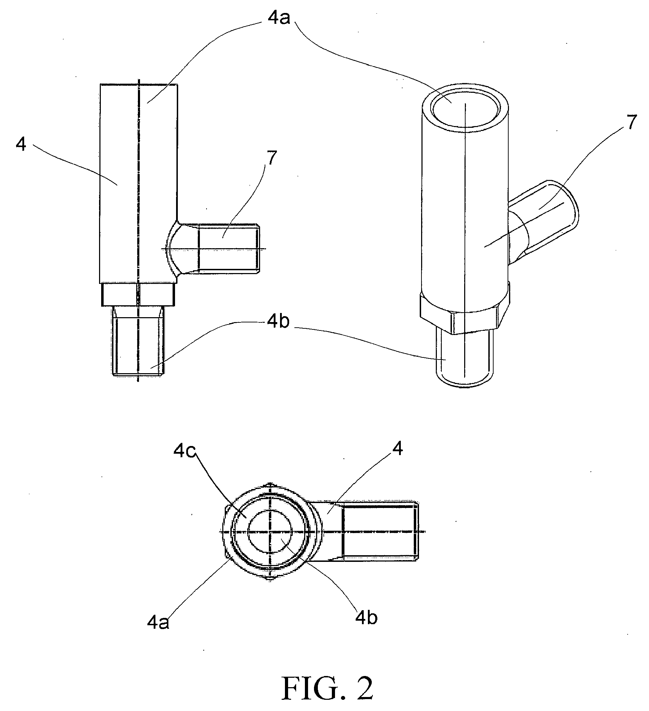

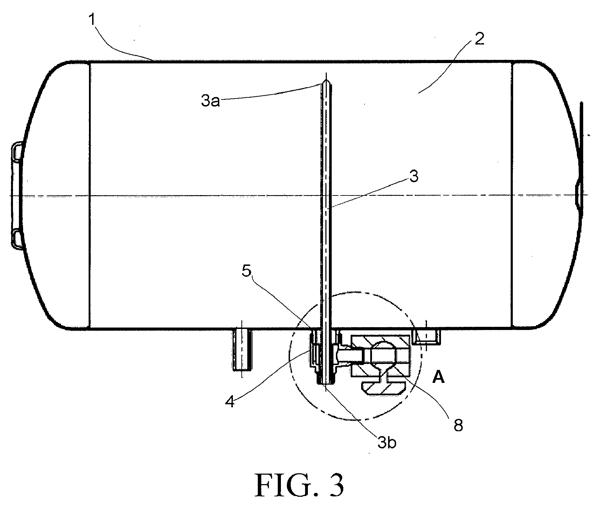

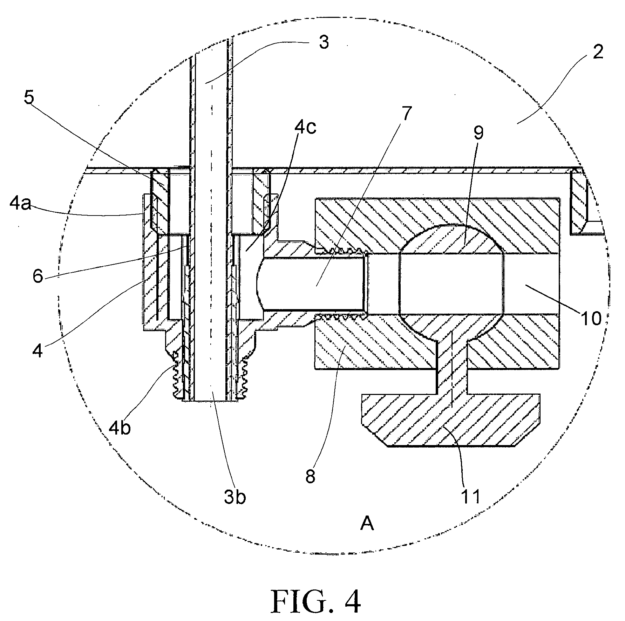

FIG. 1 is a schematic diagram of a water heater. FIG. 2 is a schematic diagram of a discharge pipe. FIG. 3 is a schematic structural diagram of the water heater. FIG. 4 is a schematic enlarged diagram of an area A in FIG. 3. As shown in FIG. 1, FIG. 2, FIG. 3, and FIG. 4:
The water heater has a housing 1 and an inner container 2 disposed in the housing 1, and further includes: a water outlet pipe 3 that is disposed on the inner container 2 and is in communication with the outside; and a discharge pipe 4 connected to the inner container 2, where an inlet end 4a of the discharge pipe 4 is close to a bottom of the inner container 2, the discharge pipe 4 is sleeved outside the water outlet pipe 3, and an inlet 3a of the water outlet pipe 3 is located at an upper part of the inner container 2 and is higher than the inlet end of the discharge pipe 4. Because the discharge pipe 4is sleeved outside the water outlet pipe 3, and the water outlet pipe 3 is disposed by penetrating the discharge pipe 4, the two form two independent pipes, which are separately used for water discharge and sewage discharge. Therefore, a user can select by himself or herself to discharge sewage according to a need. Moreover, the water outlet pipe 3 and the discharge pipe 4 use a same water outlet, without the need of disposing a special discharge outlet as an existing water heater, which saves materials. A fully foamed material is disposed at a position of the discharge outlet of the existing water heater, which reduces energy consumption.

Preferably, as shown in FIG. 4, the water outlet pipe 3 is separated from the inlet end 4a of the discharge pipe 4. As described above, the water outlet pipe 3 and the discharge pipe 4 are independent of each other, and the inlet end 4a of the discharge pipe 4 is separated from the water outlet pipe 3. In this case, an annular column inner cavity 4c is formed in the discharge pipe 4 to discharge sewage.

Preferably, the water outlet pipe 3 and the discharge pipe 4 are coaxially disposed, which more facilitates cooperative installation of the water outlet pipe 3 and the discharge pipe 4, and facilitates separation between the two.

Preferably, as shown in FIG. 4, the inner container 2 has a drainage nozzle 5, which is disposed at a bottom position of the inner container 2. An outer wall of the drainage nozzle 5 is provided with an outer screw thread, and the inlet end 4a of the discharge pipe 4 is provided with an inner screw thread matching the outer screw thread of the drainage nozzle 5. Therefore, the discharge pipe 4 is detachably installed on the drainage nozzle 5, which causes a small change in a structure of the inner container of the water heater.

Moreover, the discharge pipe 4 is detachably installed, which is convenient for replacement and inner cleaning of the pipe.

Preferably, as shown in FIG. 4, a connection channel 6 matching the water outlet pipe 3 is disposed at an outlet end 4b of the discharge pipe 4, to fix the water outlet pipe 3 to the discharge pipe 4, and form a combined component to implement a water discharge function. A drainage channel 7 is disposed on a side of the discharge pipe 4, to discharge sewage out of the inner cavity 4c, thereby implementing a sewage discharge function.

An outlet 3b of the water outlet pipe 3 may be provided in the discharge pipe or extend out of the discharge pipe according to an actual need. Preferably, the outlet 3b of the water outlet pipe 3 may be disposed in parallel with a port at an outlet end 4b of the connection channel 6. The disposing makes the water outlet pipe 3 and the connection channel 6 integrated together, which is convenient to connect to another external pipe joint.

Preferably, as shown in FIG. 4, after matching is performed between the water outlet pipe 3 and the connection channel 6, the connection channel 6 is sealed by the water outlet pipe 3, and the inner cavity 4c of the discharge pipe 4 and the drainage channel 7 form an L-shaped cavity for sewage discharge.

Preferably, as shown in FIG. 2 and FIG. 4, the discharge pipe 4 is T-shaped. The discharge pipe 4 is provided with the inlet end 4a and the outlet end 4b, and is provided with the drainage channel 7 on the side, to form a T-shaped three-way structure together.

Preferably, a valve body 8 connected to the drainage channel is disposed on the discharge pipe 4, and is used to open the drainage channel when sewage discharge is needed, and to close the drainage channel when sewage discharge is not needed. As shown in FIG. 4, the valve body 8 is in an open state. Preferably, in the foregoing structure, a valve plug 9 is disposed in the valve body 8, and the valve plug 9 has a channel 10, where the valve plug 9 rotates between a first position at which the drainage channel 7 is entirely communicated and a second position at which the drainage channel 7 is entirely closed.

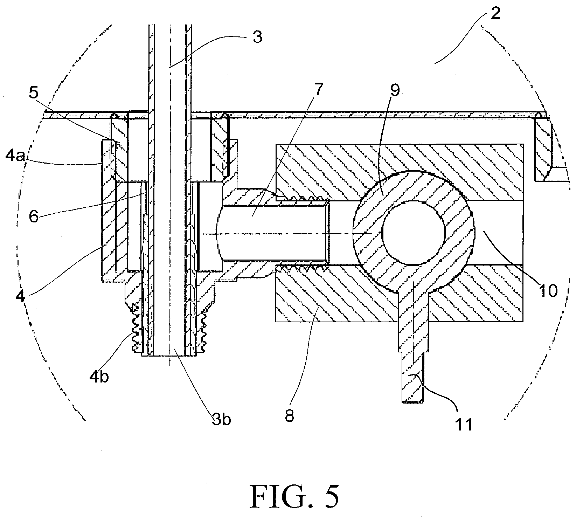

The valve plug 9 in FIG. 4 is located at the first position; in this case, the drainage channel is entirely communicated with the valve plug 9. FIG. 5 is a schematic diagram of the valve body in a closed state. The valve plug 9 in FIG. 5 is located at the second position; in this case, the valve plug 9 and the drainage channel are entirely closed.

Preferably, as shown in FIG. 4 and FIG. 5, a knob 11 is disposed outside the valve body 8, and is connected to the valve plug 9, to control the valve plug 9 to rotate to the first position and the second position.

Preferably, the foregoing knob 11 is set to be rotatable in a single direction, which is convenient for a user to adjust a working status of the valve body 8.

By means of the present invention, a prior-art problem that because a user is unable to clean up fouling in an inner container of a water heater by himself or herself, the user always uses polluted water, thereby affecting health of the user is resolved, enabling the user to clean up the fouling in the container of the water heater by himself or herself. Moreover, operations are convenient and easy. Therefore, a health hazard is eliminated in time and safety of water is ensured for the user. Moreover, by means of a structure of the water heater of the present invention, materials can be saved, energy consumption can be reduced, and damage to the water heater caused by detachment is further prevented as well.

Various specific embodiments described in the foregoing and shown in accompanying drawings are only used for illustrating the present invention, and are not regarded as the entirety of the present invention. Within the scope of the basic technical thought of the present invention, any types of modifications for the present invention made by persons ordinarily skilled in the art fall within the scope of the present invention.

## Claims

1. A water heater, having a housing (1) and an inner container (2) disposed in the housing (1), **characterized by** comprising: a water outlet pipe (3) that is disposed on the inner container (2) and is in communication with the outside; and a discharge pipe (4) connected to the inner container (2), wherein the discharge pipe (4) is sleeved outside the water outlet pipe (3), an inlet end (4a) of the discharge pipe (4) is close to a bottom of the inner container (2), and an inlet end (3a) of the water outlet pipe (3) is higher than the inlet end (4a) of the discharge pipe (4).

2. The water heater according to claim 1, **characterized in that**:
the water outlet pipe (3) is separated from the inlet end (4a) of the discharge pipe (4).

3. The water heater according to claim 2, **characterized in that**:
the water outlet pipe (3) and the discharge pipe (4) are coaxially disposed.

4. The water heater according to claim 1, **characterized in that**:
the inner container (2) has a drainage nozzle (5), and the discharge pipe (4) is detachably installed on the drainage nozzle (5).

5. The water heater according to claim 2, **characterized in that**:
a connection channel (6) matching the water outlet pipe (3) is disposed at an outlet end (4b) of the discharge pipe (4), and a drainage channel (7) is disposed on a side of the discharge pipe (4).

6. The water heater according to claim 5, **characterized in that**: an outlet (3b) of the water outlet pipe (3) is parallel to a port of the connection channel (6).

7. The water heater according to claim 5, **characterized in that**: after matching is performed between the water outlet pipe (3) and the connection channel (6), an inner cavity (4c) of the discharge pipe and the drainage channel (7) form an L-shaped cavity.

8. The water heater according to claim 7, **characterized in that**: the discharge pipe (4) is a T-shaped three-way pipe.

9. The water heater according to claim 5, **characterized by** further comprising: a valve body (8) connected to the drainage channel (7).

10. The water heater according to claim 9, **characterized in that**:
a valve plug (9) is disposed in the valve body (8), and the valve plug (9) has a channel (10), wherein the valve plug (9) rotates between a first position at which the drainage channel (7) is entirely communicated and a second position at which the drainage channel (7) is entirely closed.

11. The water heater according to claim 10, **characterized in that**: a knob (11) for controlling rotation of the valve plug (9) is disposed outside the valve body (8).

12. The water heater according to claim 11, **characterized in that**: the knob (11) is set to be rotatable in a single direction.
